Europäisches Patentamt

European Patent Office

Office européen des brevets

(11) Veröffentlichungsnummer: **0 249 730**
**A2**

(12) **EUROPÄISCHE PATENTANMELDUNG**

(21) Anmeldenummer: **87106598.3**

(22) Anmeldetag: **07.05.87**

(51) Int. Cl.4: **C08L 51/00 , C08F 279/00**

(30) Priorität: **10.05.86 DE 3615853**

(43) Veröffentlichungstag der Anmeldung:
**23.12.87 Patentblatt 87/52**

(84) Benannte Vertragsstaaten:
**BE DE FR GB NL**

(71) Anmelder: **BASF Aktiengesellschaft
Carl-Bosch-Strasse 38
D-6700 Ludwigshafen(DE)**

(72) Erfinder: **Taubitz, Christof, Dr.
In der Dreispitz 15
D-6706 Wachenheim(DE)**
Erfinder: **Seiler, Erhard, Dr.
Erpolzheimer Strasse 1
D-6700 Ludwigshafen(DE)**
Erfinder: **Schlemmer, Lothar
Duisbergstrasse 1 a
D-6701 Maxdorf(DE)**

(54) **Verfahren zur Herstellung von schlagfesten thermoplastischen Formmassen.**

(57) Die Erfindung betrifft ein Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha,\beta$-ungesättigten Dicarbonylverbindungen (Komponente B) wobei die Umsetzung in Abwesenheit von Initiatoren in einer Schmelze aus A in Gegenwart von B durchgeführt wird und als Harz A ein solches verwendet wird, das bezogen auf A, 3 bis 50 Gew.% mindestens eines Elastomeren $a_1$ (Kautschuk) enthält, und in an sich bekannter Weise durch Polymerisation mindestens eines vinylaromatischen Monomeren mit 8 bis 12 C-Atomen in Gegenwart des Elastomeren $a_1$ hergestellt worden ist.

Die Formmassen werden zur Herstellung von Formteilen verwendet.

EP 0 249 730 A2

## Verfahren zur Herstellung von schlagfesten thermoplastischen Formmassen

Die Erfindung betrifft ein Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha$-$\beta$-ungesättigten Dicarbonylverbindungen (Komponente B) bei erhöhter Temperatur.

Zum Stand der Technik nennen wir:

(1) DE-OS 17 69 118

(2) EP 21 488

(3) DE-AS 26 13 352

(4) DE-OS 30 47 303

(5) DE-OS 34 09 656 und

(6) US-PS 3 661 866.

Es ist bekannt, daß die Schlagfestigkeit von Polystyrol durch Einarbeiten eines kautschukartigen Materials in Polystyrol verbessert werden kann. Hierzu kann man die beiden Komponenten entweder mechanisch miteinander mischen, oder man führt vorteilhafterweise die Polymerisation des Styrols in Gegenwart des Kautschuks durch. In (1) bis (5) sind schlagzähe Polystyrole (HIPS) beschrieben.

Nachteilig ist die schlechte Haftung und Verträglichkeit mit anderen Polymeren.

In (6) sind modifizierte Polystyrole beschrieben, bei denen Polystyrol mit Maleinsäureanhydrid unter Verwendung von 0,1 bis 5 Mol eines Radikalbildners, bezogen auf 1 Mol Styrol, basierend auf die Monomereinheit Styrol, umgesetzt wird. Nachteilig ist der starke Abbau des Molekulargewichts des Polystyrols.

Es bestand daher die Aufgabe, Vinylaromaten enthaltende Polymere von hoher Schlagzähigkeit und zugleich guter Verträglichkeit mit anderen Polymeren herzustellen.

Diese Aufgabe wird gelöst durch ein Verfahren gemäß Patentanspruch 1.

Die Erfindung betrifft daher ein Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha$-$\beta$-ungesättigten Dicarbonylverbindungen (Komponente B) bei erhöhter Temperatur.

Das Verfahren ist dadurch gekennzeichnet, daß die Umsetzung in Abwesenheit von Initiatoren in einer Schmelze aus A in Gegenwart von B durchgeführt wird und als Harz A ein solches verwendet wird, das bezogen auf A, 3 bis 50 Gew.% mindestens eines Elastomeren $a_1$ (Kautschuk) enthält und in an sich bekannter Weise durch Polymerisation mindestens eines vinylaromatischen Monomeren mit 8 bis 12 C-Atomen in Gegenwart des Elastomeren $a_1$ hergestellt worden ist.

Nachstehend werden der Aufbau der Formmasse aus den Komponenten, deren Herstellung und die Herstellung der Formmasse beschrieben.

Die Formmasse enthält (besteht vorzugsweise aus), jeweils bezogen auf A + B, folgende Anteile der Komponenten:

A 80 bis 99,95 Gew.%, vorzugsweise 90 bis 99,8 Gew.%, insbesondere 97 bis 99,9 Gew.%, wobei die Komponente A (Harz A), bezogen auf A, 3 bis 50 Gew.%, vorzugsweise 3 bis 30 Gew.%, insbesondere 5 bis 20 Gew.% eines Elastomeren $a_1$ aufweist.

B 20 bis 0,05 Gew.%, vorzugsweise 10 bis 0,1 Gew.%, insbesondere 3 bis 0,1 Gew.%.

Zusätzlich kann die Formmasse, bezogen auf 100 Gew.-Teile A + B, 0,1 bis 90 Gew.-Teile, vorzugsweise 0,5 bis 40 Gew.-Teile einer Komponente C aufweisen.

## Komponente A

Die Komponente A (Harz A) ist aufgebaut aus mindestens einem vinylaromatischen Monomeren mit 8 bis 12 C-Atomen und aus einem Elastomeren $a_1$.

Das vinylaromatische Monomer ist bevorzugt ausgewählt aus der Gruppe Styrol, $\alpha$-Methylstyrol und/oder p-Methylstyrol. In untergeordneten Mengen können auch noch Comonomere, wie (Meth)acrylate oder (Meth)acrylsäure miteingesetzt werden, im allgemeinen fehlten die Comonomeren. Besonders bevorzugt wird Styrol alleine verwendet.

Das Elastomere $a_1$ (kautschukartiges Polymerisat) ist im allgemeinen Polyisopren-Kautschuk, Acrylnitril-Butadien-Kautschuk, Ethylen-Propylen-Kautschuk und Polyacrylat-Kautschuk. Bevorzugt werden Polybutadien-Styrol-Butadien-und Styrol-Butadien-Block-Kautschuke, wobei der Blockkautschuk in der dem Fachmann bekannten Form vorliegen kann, wie scharf getrennte oder verschmierte Blöcke, AB, ABA, ABAB, ABC, sternförmig usw. (s. auch Winnacker-Küchler, "Chemische Technologie", Bd. 6, S. 373). Von den Blockkautschuken werden insbesondere die linearen Zweiblockcopolymerisate mit 15 bis 75 Gew.% Blockstyrolgehalt und ·85 bis 25 Gew.% Butadien angewendet. Diese weisen mittlere Molekulargewichte (Gewichtsmittel) im Bereich von 10 000 bis 2 Mio, vorzugsweise von 50 000 bis 200 000 auf.

Bevorzugt wird anstelle, ober in Abmischung mit den genannten Zweiblock-Copolymerisaten Polybutadien mit Molekulargewichten im Bereich von 50 000 bis 450 000 (Gewichtsmittel) vom Typ der medium oder high-cis Typen angewendet.

Das schlagfeste Harz A wird in bekannter Weise hergestellt durch Polymerisation der vinylaromatischen Monomeren in Gegenwart des Elastomeren $a_1$.

Bei der bevorzugten Arbeitsweise wird im allgemeinen das Elastomere $a_1$ (der Kautschuk) in dem monomeren vinylaromatischen Monomeren (Styrol) gelöst und diese Ausgangslösung dann entweder in Masse, Lösung oder nach einem kombinierten Masse-Suspension-Verfahren kontinuierlich oder diskontinuierlich polymerisiert. Die zu polymerisierende Lösung des Elastomeren in dem Monomeren Styrol trennt sich dabei nach Einsetzen der Polymerisationsreaktion in zwei Phasen, von denen die eine, eine Lösung des Elastomeren im monomeren Styrol, zunächst die kohärente Phase bildet, während die zweite, eine Lösung des gebildetem Polystyrols in seinem eigenen Monomeren, in ihr in Tröpfchen suspendiert bleibt. Mit steigendem Umsatz vermehrt sich die Menge der zweiten Phase auf Kosten der ersten und unter Verbrauch der Monomeren; dabei tritt ein Wechsel der Phasenkohärenz auf, sobald die Menge an gebildetem Polystyrol die Menge an eingesetztem Kautschuk übersteigt. Bei dieser Phaseninversion bilden sich Tropfen von Kautschuk-Lösung in der Polystyrol-Lösung aus; diese Tropfen halten aber ihrerseits kleinere Tröpfchen der jetzt äußeren Phase des Polystyrols fest eingeschlossen. Gleichzeitig findet bei dieser Polymerisation eine Pfropfung des Kautschuks durch Polystyrolketten statt.

Die Polymerisation erfolgt dabei in aller Regel in mehreren Stufen, wobei in der ersten Polymerisationsstufe, während der sogenannten Vorpolymerisation, die styrolische Kautschuklösung unter Scherung bis zu einem Umsatz jenseits des Phaseninversionspunktes polymerisiert und anschließend bei verminderter oder ganz ohne Scherung bis zu dem gewünschten Styrol-Umsatz auspolymerisiert wird. Die kontinuierliche Masse-oder Lösungspolymerisation ist beispielsweise in den US-Patentschriften 26 94 692 und 32 43 481 oder der DE-OS 17 70 392 beschrieben. Die diskontinuierliche Verfahrensweise der kombinierten Masse-Suspensionspolymerisation ist z.B. aus der DE-OS 15 95 230 bekannt.

## Komponente B

Komponente B sind Monomere aus gegebenenfalls substituierten $\alpha,\beta$-ungesättigten Dicarbonyl-Verbindungen, wie $\alpha,\beta$-ungesättigten Dicarbonsäuren, Dicarbonsäreanhydriden, Dicarbonsäureimiden, die gegebenenfalls N-substituiert sind, Monoester der Dicarbonsäuren, Monoamide der Dicarbonsäure, Diester der Dicarbonsäuren, Diamide der Dicarbonsäuren.

Bevorzugt sind Maleinsäure, Maleinsäureanhydrid, Methylmaleinsäureanhydrid, Chlormaleinsäureanhydrid, die Halbester und Halbamide, wie der Halbester aus Maleinsäureanhydrid mit 2-Ethylhexylalkohole, außerdem N-Phenylmaleinimid, außerdem besonders bevorzugt Fumarsäure.

## Komponente C

Als Komponente C kommen übliche Hilfsmittel in den dem Fachmann bekannten Mengen in Betracht, die entweder für die Herstellung der Komponente A üblich sind, z.B. Mineralöle, Silikonöle oder andere Gleit-und Entformungsmittel.

Außerdem können die nach dem erfindungsgemäßen Verfahren hergestellten Formmassen in der üblichen Weise modifiziert werden. Sie können daher z.B. mit Polymeren, Verstärkungs-und Füllstoffe, insbesondere Glasfasern, Flammschutzmittel, Stabilisatoren, Gleit-und Flammschutzmittel sowie Farbstoffe und Pigmente enthalten. Als Verstärkungsmittel können z.B. Glasfasern, Glaskugeln, Kaolin, Quarz, Glimmer, Wollastonit, Talkum, Asbest, Titandioxid, Aluminiumoxid, Micovit, Kreide oder calcinierters Aluminiumsilikat eingesetzt werden.

## Herstellung der thermoplastischen Formmasse

Zur Durchführung des erfindungsgemäßen Verfahrens ist es erforderlich, daß in Abwesenheit von Initiatoren die Komponenten A und B in, d.h. das Harz A mit den Monomeren B, in der Schmelze aus A in Gegenwart von B, umgesetzt werden.

Im allgemeinen beträgt die Temperatur 120 bis 280°C, insbesondere 140 bis 240°C. Zur Umsetzung geeignet sind an sich bekannte Mischvorrichtungen, wie Brabendermischer, Ein-oder Zweischneckenextruder. Vorzugsweise verwendet man dafür einen Zweischneckenextruder mit im gleichen Sinne rotierenden Schneckenwellen in einem Viskositätsbereich während der Reaktion in der Schneckenmaschine von etwa 0,01 bis 300 Pas, wobei die Schmelze (das Reaktionsgemisch) in einer Schneckenzone mit intensiv mischenden Knetelementen bei Knetfrequenzen bis 15 Hertz und mit einem Geschwindig keitsgefälle im radialen Spiel zwischen Kamm und Gehäusewand von mehr als 2000 sec$^{-1}$ bearbeitet wird.

Durch diese Maßnahmen wird das Harz A mit den Monomeren B intensiv radial gemischt, daß die Reaktion homogen abläuft und ein Anhaften des Stoffes an den Schneckenwellen und Gehäusewänden verhindert wird. Es ist bevorzugt, daß die Reaktion in Schneckenmaschinen mit üblichen radialen Spielen von je nach Schneckengröße 0,1-0,6 mm bei Schneckendrehzahlen über 150 U/min erfolgt. So beträgt z.B. die bei einer zweiwelligen Schneckenmaschine mit 53 mm Außendurchmesser der Schnecken und einem Radialspiel von 0,2 mm mit Erfolg angewandte Drehzahl 300 U/min. Hieraus ergibt sich ein maximales Geschwindigkeitsgefälle im gescherten Produkt von 4170 sec$^{-1}$ zwischen Schneckenaußendurchmesser und Gehäuse, also im radialen Spiel gerechnet. Geeignete Knetelemente sind z.B. die in DE-PS 813 154 und DE-PS 940 109 beschriebenen und in den Fig. 2-6 im Querschnitt dargestellten prismatischen Scheiben verschiedener Geometrie, die sich bis auf das maschinentechnisch notwendige kleine Spiel in jeder Stellung gegenseitig abschaben und im Zusammenwirken mit den Gehäusegraten (18, 19) auf den zu mischenden Stoff hohe Scher-und Reibungskräfte ausüben. Mehrere derartige Knetscheiben, auf der Welle in Umfangsrichtung jeweils versetzt angeordnet, ergeben eine Knetzone (7, 8, 9 in Fig. 1).

Die Verweilzeit sowohl in Knet-als auch Reaktionszone beträgt im allgemeinen 0,5 bis 20 Min., bevorzugt 1 bis 7 Minuten.

Die Komponenten A und B (gegebenenfalls mit Komponente C, z.B. Schmiermittel) werden vorzugsweise gemeinsam dosiert und in einem Aufschmelzteil aufgeschmolzen. Die Extruderschnecke im Aufschmelzteil enthält bevorzugt Knetelemente. An die Aufschmelzzone schließt sich die Reaktionszone an, die bevorzugt Knetelemente und zusätzlich Knetelemente mit rückwärts förderndem Gewinde enthält. Vor dem Produktaustrag befindet sich bevorzugt eine Entgasungszone zur Entfernung der flüchtigen Bestandteile. Die ausgetragene Schmelze wird im allgemeinen granuliert.

Die Granulate sind vielfältig verwendbar, sie können die nach dem erfindungsgemäßen Verfahren hergestellten Formmassen als Haftmittler eingesetzt werden. Sie eignen sich auch als Werkstoffe, Folien, dünne Haftschichten, Schmelzkleber und Beschichtungen.

Die in den Beispielen und Vergleichsversuchen beschriebenen Parameter wurden wie folgt bestimmt:

1. Streckspannung, ST, in N/mm² nach DIN 53 455
2. Reißfestigkeit, RF, in N/mm² nach DIN 53 455
3. Lochkerbschlagzähigkeit $a_{KL}$, in KJ/m² nach DIN 53 753.

Zur Durchführung des erfindungsgemäßen Verfahrens und von Vergleichsversuchen wurden folgende Produkte verwendet:

### I. Herstellung von schlagzähem Polystyrol 1

In einem 5 l Rührkessel mit Blattrührer wurde eine Lösung, bestehend aus 1600 g Styrol, 150 g eines Butadien/Styrol-Blockpolymerisats mit verschmiertem Übergang zwischen den Blöcken ($\eta$ = 1,58 dl/g in Toluol bei 25°C, Block-PS = 39,4 Gew.% mit $\eta$ = 0,470 dl/g, Gesamtstyrolgehalt = 40,5 Gew.%, $M_v$ = 98000; $M_n$ = 53000), 45 g Mineralöl, 1,8 g t-Dodecylmercaptan, 2,2 g Octadecyl-2-(3',5'-di-tert.butyl-4'-hydroxyphenyl)-propionat und 1,8 g Dicumylperoxid bei 115°C Innentemperatur und einer Rührerdrehzahl von 200 Upm bis zu einem Feststoffgehalt von 46,5 % vorpolymerisiert. Anschließend wurden 1800 ml Wasser, die 9,0 g Polyvinylpyrrolidon vom K-Wert 90 und 1,8 g Na$_4$P$_2$O$_7$ enthielten, zugesetzt und die Rührerdrehzahl auf 300 Upm erhöht. Durch Nachpolymerisation von 5 Stunden bei 120°C und 5 h bei 140°C wurde auspolymerisiert, das Polymere abgetrennt und getrocknet.

II. Herstellung von schlagzähem Polystyrol 2

6 Teile eines Polybutadiens vom medium-cis-Typ (Diene HX 529) mit einem mittleren Molekulargewicht 300 000 (Gewichtsmittel) wurden in einer Mischung von 6 Teilen Ethylbenzol und 88 Teilen Styrol gelöst. Anschließend wurde die Mischung mit 0,1 Teilen tert.-Dodecylmercaptan und 0,18 Teilen tert.-Butylbenzoat versetzt und bei 118°C 2 h und anschließend bei 140°C polymerisiert. Das Polymere wird über einen Extruder aufgearbeitet.

Nachstehend wird das erfindungsgemäße Verfahren anhand von Beispielen und Vergleichsversuchen näher erläutert. Alle darin genannten Teile und Prozente beziehen sich auf das Gewicht.

Beispiel 1

99,2 Gew.% Polystyrol 1 und 0,8 Gew.% Fumarsäure werden in einem Zweischneckenextruder (ZSK 53) der Firma Werner & Pfleiderer dosiert und in einem ersten Teil unter Verwendung von Knetelementen bei 180°C aufgeschmolzen, anschließend in einem zweiten Teil unter Kneten und Verwendung von zurückfördernden Knetelementen bei 105°C umgesetzt und anschließend in einer Entgasungszone bei 180°C durch Anlegen von Vakuum entgast. Die mittlere Verweilzeit im Extruder beträgt 4 Min, die Drehzahl 150 Hertz. Die austretende Schmelze wird durch ein Wasserbad geleitet und granuliert. Die eingebaute Menge an Fumarsäure beträgt 0,65 Gew.%.

Vergleichsversuch A

98,75 Gew.% Polystyrol 1, 1 Gew.% Maleinsäureanhydrid und 0,25 Gew.% Dibenzoylperoxid werden gemäß Beispiel 1 umgesetzt. Es sind 0,4 Gew.% Maleinsäureanhydrid eingebaut.

Beispiel 2

99 Gew.% Polystyrol 2 und 1 Gew.% Fumarsäure werden gemäß Beispiel 1 umgesetzt. Die eingebaute Menge beträgt 0,7 Gew.%.

Vergleichsversuch B

98,25 Gew.% Polystyrol 2, 1 Gew.% Maleinsäureanhydrid und 0,25 Gew.% Dibenzoylperoxid werden gemäß Beispiel 1 umgesetzt. Die eingebaute Menge MSA beträgt 0,5 Gew.%.

Beispiel 3

97 Gew.% Polystyrol 2 und 3 Gew.% N-Phenylmaleinimid werden gemäß Beispiel 1 umgesetzt. Die eingebaute Menge beträgt 1,6 Gew.%.

Vergleichsversuch C

96,5 Gew.% Polystyrol 2, 3 Gew.% Maleinsäureanhydrid und 0,5 Gew.% Dibenzoylperoxid werden gemäß Beispiel 1 umgesetzt. Die eingebaute Menge beträgt 1,0 Gew.%.

An Proben von Polymeren der Beispiele und Vergleichsversuche A, B und C wurden die Streckspannung, die Reißfestigkeit und die Lochkerbschlagzähigkeit bestimmt. Die Meßwerte sind in der Tabelle zusammen mit denen der Harze Polystyrol 1 und 2 angegeben. Ein Vergleich der mechanischen Werte zeigt, daß die nach dem erfindungsgemäßen Verfahren hergestellten Produkte eine bessere Mechanik aufweisen als die Proben der Vergleichsversuche.

Tabelle

| Produkt | Streckspannung ST | Reißfestigkeit RF | Lochkerbschlagzähigkeit $a_{KL}$ |
|---|---|---|---|
| Polystyrol 1 | 24,5 | 17,0 | 7,1 |
| Polystyrol 2 | 26,0 | 23,1 | 10,0 |
| Beispiel 1 | 25,6 | 23,0 | 8,9 |
| Vergleich A | 20,0 | 14,0 | 5,9 |
| Beispiel 2 | 28,0 | 24,1 | 11,0 |
| Vergleich B | 21,0 | 16,0 | 8,2 |
| Beispiel 3 | 30,0 | 24,4 | 10,5 |
| Vergleich C | 20,0 | 15,0 | 7,1 |

**Ansprüche**

1. Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha,\beta$-ungesättigten Dicarbonylverbindungen (Komponente B) bei erhöhter Temperatur, dadurch gekennzeichnet, daß die Umsetzung in Abwesenheit von Initiatoren in einer Schmelze aus A in Gegenwart von B durchgeführt wird und als Harz A ein solches verwendet wird, das bezogen auf A, 3 bis 50 Gew.% mindestens eines Elastomeren $a_1$ (Kautschuk) enthält, und in an sich bekannter Weise durch Polymerisation mindestens eines vinylaromatischen Monomeren mit 8 bis 12 C-Atomen in Gegenwart des Elastomeren $a_1$ hergestellt worden ist.

2. Verfahren nach Anspruch 1, dadurch gekennzeichnet, daß die Umsetzung in Gegenwart von üblichen Zusatzstoffen (Komponente C) durchgeführt wird.

3. Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha,\beta$-ungesättigten Dicarbonylverbindungen (Komponente B) bei erhöhter Temperatur, dadurch gekennzeichnet, daß die Umsetzung in Abwesenheit von Initiatoren in einer Schmelze aus A in Gegenwart von B durchgeführt wird und als Harz A ein solches verwendet wird, das bezogen auf A, 3 bis 50 Gew.% mindestens eines Elastomeren $a_1$ (Kautschuk) enthält, und in an sich bekannter Weise durch Polymerisation mindestens eines vinylaromatischen Monomeren mit 8 bis 12 C-Atomen in Gegenwart des Elastomeren $a_1$ hergestellt worden ist, ferner gekennzeichnet dadurch, daß die Monomeren B ausgewählt sind aus der Gruppe der $\alpha,\beta$-ungesättigten Dicarbonsäuren mit 4 bis 8 C-Atomen, oder den Derivaten davon, wie den Anhydriden, den Imiden und deren N-substituierten Derivaten, sowie den Monoestern dieser Säuren von Alkoholen mit 1 bis 3 C-Atomen.

4. Verfahren nach Anspruch 3, dadurch gekennzeichnet, daß die Monomeren B ausgewählt werden aus der Gruppe von Maleinsäure, Maleinsäureanhydrid und Alkyl-oder Aryl-substituiertem Maleinimid.

5. Verfahren nach Anspruch 3, dadurch gekennzeichnet, daß das Monomere B Fumarsäure ist.

6. Verfahren nach Anspruch 3, dadurch gekennzeichnet, daß die Monomeren B in einer Menge von 0,05 bis 20 Gew.%, bezogen auf A + B, angewendet werden.

7. Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha,\beta$-ungesättigten Dicarbonylverbindungen (Komponente B) bei erhöhter Temperatur, dadurch gekennzeichnet, daß die Umsetzung in Abwesenheit von Initiatoren bei Temperaturen von 120 bis 280°C in einer Schmelze aus A in Gegenwart von B durchgeführt wird und als Harz A ein solches verwendet wird, das bezogen auf A, 3 bis 30 Gew.%

mindestens eines Elastomeren $a_1$ (Kautschuk) enthält, in an sich bekannter Weise durch Polymerisation mindestens eines vinylaromatischen Monomeren mit 8 bis 12 C-Atomen in Gegenwart des Elastomeren $a_1$ hergestellt worden ist.

8. Verfahren zur Herstellung von schlagfesten thermoplastischen Formmassen auf Basis eines mindestens ein vinylaromatisches Monomeres enthaltenden Harzes A durch Umsetzen des Harzes A (Komponente A) mit mindestens einem Monomeren aus der Gruppe der $\alpha,\beta$-ungesättigten Dicarbonylverbindungen (Komponente B) bei erhöhter Temperatur, dadurch gekennzeichnet, daß die Umsetzung in einem Schneckenextruder üblicher Bauart bei Verweilzeiten von 1 bis 7 Minuten mit einem Geschwindigkeitsgefälle im radialen Spiel zwischen Kamm und Gehäusewand von mehr als 2000 $sec^{-1}$ in Abwesenheit von Initiatoren bei Temperaturen von 140 bis 240°C in einer Schmelze aus A in Gegenwart von B durchgeführt wird und als Harz A ein solches verwendet wird, das bezogen auf A, 3 bis 30 Gew.% mindestens eines Elastomeren $a_1$ (Kautschuk) auf Basis von Polybutadien und/oder von Butadien/Styrol-Zweiblockcopolymerisaten enthält, in an sich bekannter Weise durch Polymerisation von Styrol in Gegenwart des Elastomeren $a_1$ hergestellt worden ist, ferner gekennzeichnet dadurch, daß die Monomeren B ausgewählt sind aus Fumarsäure und N-phenylsubstituiertem Maleinimid.

9. Thermoplastische Formmasse hergestellt nach dem Verfahren gemäß Anspruch 1.

10. Formteile aus Formmassen hergestellt nach dem Verfahren von Anspruch 1.